(19) Europäisches Patentamt
European Patent Office
Office européen des brevets

(11) Publication number: 0 185 793 A1

# (12) EUROPEAN PATENT APPLICATION

(21) Application number: 84116293.6

(22) Date of filing: 24.12.84

(51) Int. Cl.[4]: G 03 C 7/32
//G03C1/04, C08F226/02, C07C103/76, G03C7/30

(43) Date of publication of application: 02.07.86 Bulletin 86/27

(84) Designated Contracting States: AT BE CH DE FR GB IT LI LU NL SE

(71) Applicant: AGFA-GEVAERT naamloze vennootschap
Septestraat 27
B-2510 Mortsel(BE)

(72) Inventor: van Thillo, Etienne Adrianus
Hemelrijk 13
B-2190 Essen(BE)

(72) Inventor: Monbaliu, Marcel Jacob
Neuris 9
B-2510 Mortsel(BE)

(72) Inventor: De Winter, Walter Frans
Parklaan 11
B-2232 's-Gravenwezel(BE)

## (54) Copolymer latex and photographic silver halide materials containing such latex.

(57) An aqueous dispersion of a copolymer wherein the copolymer contains recurring units of a monomer which includes a chemically reactive molecule for use in silver halide photography, characterized in that said monomer corresponds to the following general formula:

$H_2C=CH-CH_2-Y$

wherein:
Y is a chemicall\ reactive moiety, e.g. colour coupler moiety, for use in silve· halide photography.

EP 0 185 793 A1

0185793

Copolymer latex and photographic silver halide materials containing such latex.

The present invention relates to a latex of a copolymer containing recurring units including a chemically reactive molecule part for use in silver halide photography and to photographic silver halide emulsion materials containing such latex.

The incorporation of substances that have to fulfil a role in providing or maintaining certain properties in photographic hydrophilic colloid binder silver halide materials is a problem that has been dealt with already in different ways. For example, for incorporating colour couplers, dispersion techniques have been applied wherein the coupler is dissolved in a water-immiscible solvent, a so-called oil-former, and the solution is dispersed in the form of fine droplets in the hydrophilic colloid medium of a photographic silver halide emulsion. Apart from the advantages of that technique the oily coupler solvents tend to soften the emulsion layer whereby it becomes less scratch-resistant.

In order to remedy for defects associated wth the use of oil formers there has been provided a method of incorporating colour couplers in an aqueous colloid medium in the form of a latex i.e. as a chemically structural part of polymer particles that have been dispersed in aqueous medium. Such method has been described e.g. in the United States Patent Specifications 2,976,294; 3,356,686; 3,767,412; 4,080,211 and 4,340,664.

These latexes may contain a high percentage of polymer particles e.g. up to 50 % by weight, and nevertheless still possess a relatively low viscosity. The incorportion of these latexes in hydrophilic colloid media may proceed without the use of organic solvents or alkaline solutions and no special dispersing techniques have to be applied.

However, the use of latexes is not without problems, e.g. with regard to dispersion stability and may give rise to a lower photographic activity of the chemically reactive part since they are at least partly arranged inside the dispersed particle and thereby only reachable to a limited extent by the substances used in photographic processing. Further, copolymerisation does not proceed completely when colour coupler monomers are used that are solid at room temperature (20°C).

It is an object of the present invention to provide a latex copolymer containing recurring units including chemically reactive molecule parts for use in silver halide photography in a large amount at the surface of

the latex particles.

In accordance with the present invention an aqueous dispersion of a copolymer (also called copolymer latex) is provided wherein the copolymer contains recurring units of a monomer which includes a chemically reactive molecule part for use in silver halide photography, called hereinafter chemically reactive moiety, characterized in that said monomer corresponds to the following general formula (A) :

$$H_2C=CH-CH_2-Y \qquad (A)$$

wherein :

Y is a chemically reactive moiety for use in silver halide photography.

The chemically reactive moiety may function as a colour coupler, a competing coupler, a development accelerator e.g. benzyl- -picolinium bromide, a foggant including hydrazines and hydrazides, e.g. acetyl-phenylhydrazine, a developing agent, e.g. a hydroquinone, a 1-phenyl-3-pyrazolidinone, ascorbic acid and the like, a fog-inhibiting compound, e.g. a 1-phenyl-5-mercaptotetrazole, a developing inhibitor releasing compound (DIR-compound), a bleaching-inhibitor-releasing compound (BIR-compound), a bleaching-activator-releasing compound (BAR-compound).

In forming the copolymer latex according to the invention one or more monomers which include said chemically reactive moiety may be used.

The invention is particularly concerned with copolymer latices wherein the recurring units of the monomer which includes said chemically reactive moiety are recurring units of a monomeric coupler which is capable of oxidatively coupling with colour developing agents to form dyes or colourless compounds i.e. units of a monomeric colour coupler and/or a monomeric competing coupler. Competing couplers are well-known couplers used in colour photography in those instances where oxidation products of colour developing gents should be rendered ineffective for preventing degradation of the image quality by the formation of colourless products.

The photographic colour coupler monomers or competing coupler monomers used in the formation of copolymer latexes of the present

invention are represented by the following general formula (B) :

$$H_2C{=}CH{-}CH_2{-}Q \qquad (B)$$

wherein :

Q is a colour coupler group or competing coupler group capable of oxidatively coupling with a colour developing compound, in particular with an aromatic primary amino compound, e.g. of the p-phenylene diamine type; in particular Q is a coupler group of the phenol or naphthol type, of the pyrazolone or indazolone or of the acylacetamide type.

The colour coupler or competing coupler group Q may be:

1. A group of a cyan-forming colour coupler of the phenol or naphthol type e.g. within the scope of the following general formula (I) :

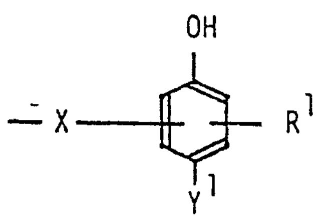

(I)

wherein :

X is a single chemical bond or a bivalent organic group, e.g. -NH-CO- group linked to the group $H_2C{=}CH{-}CH_2{-}$ of formula (B),

$R^1$ represents hydrogen, a substitutent of the type used in phenol or naphthol colour couplers e.g. halogen, alkyl or aryl, aminoacyl or the atoms necessary to complete a fused-on benzene nucleus, which may be substituted, and

$Y^1$ represents a hydrogen atom in the case of 4-equivalent couplers or a substituent that splits off upon colour development, thus conferring to the colour coupler a 2-equivalent character for example a halogen atom e.g. chlorine, an acyloxy group, an alkoxy, aryloxy, or heterocycloxy group, an alkylthio, arylthio, or heterocyclic thio group e.g. a tetrazolylthio group or a phenylazo group.

2. a group of a magenta-forming colour coupler of the pyrazolone or indazolone type e.g. within the scope of the following general formula (II) :

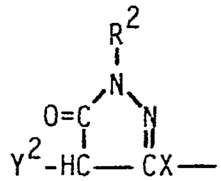

(II)

wherein :

$R^2$ is a substituent of the type used in the 1-position of 2-pyrazolin-5-one colour couplers e.g. alkyl or substituted alkyl e.g. haloalkyl such as fluoroalkyl, cyanoalkyl and benzyl, or aryl or substituted aryl e.g. phenyl, which may be substituted by alkyl, halogen, e.g. trichlorophenyl, alkoxy, haloalkoxy, alkyl sulphonyl, haloalkyl sulphonyl, alkylthio, or haloalkylthio,

$Y^2$ is hydrogen in the case of 4-equivalent couplers or a substitutent that splits off upon colour development, thus conferring to the colour coupler a 2-equivalent charcter for example a halogen atom e.g. chlorine, an acyloxy group, an alkoxy group, an aryloxy group, or a heterocycloxy group, an aryloxy group, or a heterocycloxy group, an alkylthio group, an arylthio group, or a heterocyclic thio group e.g. a tetrazolylthio or a phenylazo group, and

X has the same meaning as in formula (I).

3. a group of a yellow-forming colour coupler of the acylacetamide type, especially the acylacetanilide type e.g. an anilino-carbonylacetophenyl group or a benzoylacetamidophenyl group, wherein both aryl groups may be substituted by substituents well-known in yellow-forming colour couplers e.g. alkyl, alkoxy, halogen, alkylthio or alkylsulphonyl, and wherein the active methylene group may carry a substituent conferring to the colour coupler a 2-equivalent character for example a halogen atom e.g. chlorine, acyloxy, an alkoxy, aryloxy, or heterocycloxy group, an alkylthio, arylthio or heterocyclic thio group.
4. A competing coupler group of the type of the colour couplers referred to hereinbefore, especially of the pyrazolone type, wherein one hydrogen atom of an active methylene group is replaced by alkyl, preferably $C_1$-$C_4$ alkyl or substituted alkyl e.g. benzyl, preferably a competing coupler group of the 2-pyrazolin-5-one type.

The preparation of monomers containing as said group Y a colour coupler moiety is illustrated by the following preparation :

Preparation 1

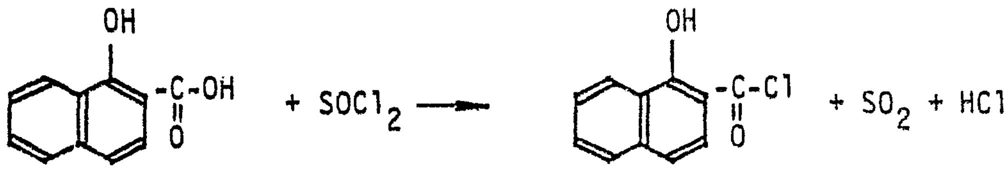


(I)                                        (II)

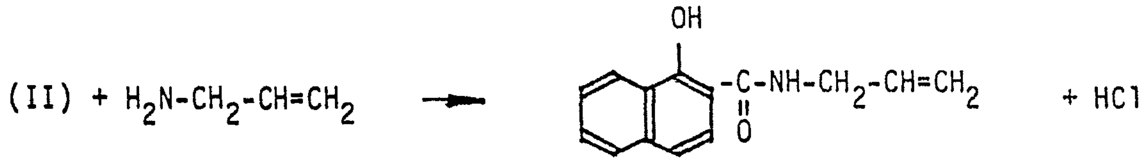


(I)                                        (II)

In a 3-necked reaction flask of 500 ml provided with a stirrer, a thermometer, a reflux condensor and a dropping funnel were introduced successively 75.2 g (0.4 mole) of 1-hydroxy-2-naphthoic acid, 1 ml of dimethyl formamide, 0.1 g of m-dinitrobenzene, 83.3 g (0.7 mole) of thionyl chloride and 100 ml of dioxan.

While stirring the reaction mixtrue was heated to 30°C whereby a solution was obtained. Heating proceeded up to 70°C and that temperature was maintained for 1 h. Thereupon non-reacted thionyl chloride was removed under diminished pressure obtained by water pump. After cooling to room temperature 28.55 g (0.5 mole) of allylamine were added within a period of 15 min. The reaction proceeded exothermally and the temperature rose to 90°C.

By means of an ice-bath the temperature was lowered to 70°C and at that temperature 45.5 g (0.45 mole) of triethyl amine were added within a period of 10 min. Cooling with the ice-bath kept the temperature at about 70°C which temperature was maintained for 2 h.

After cooling to room temperature the triethyl amine hydrochloride was removed by filtration and washed with dioxan. Yield : 49.2 g.

The filtrate was concentrated at 80°C under diminished pressure using a rotary evaporator connected to a water pump. To the concentrate 500 ml of toluene was added. The obtained solution was extracted with water and 0.1 N hydrochloric acid and thereupon with a 2 % by weight aqueous

solution of sodium hydrogen carbonate and at last with water again.

After the removal of the toluene under diminished pressure with rotary evaporator the oily residue was introduced into 100 ml of diethyl ether.

A crystalline substance was obtained by cooling at -10°C.
Yield : 15 g.

The NMR-spectrum confirmed the structure of 1-hydroxy-2-(N-allylamine)-naphthoic acid amide.

As referred to thereinbefore, the monomer including said photographically useful group can likewise be a monomeric DIR-compound, BIR-compound, and BAR-compound formed from a known DIR-, BIR- and BAR-compound by introduction of the allyl group. DIR-, BIR- and BAR-compounds are well known in the photographic art and are compounds which by an elimination reaction during photographic processing release a development inhibitor, bleach inhibitor or bleach accelerator. These compounds include the well-known classes of couplers e.g. as referred to thereinbefore, which carry at their coupling position a group which upon being split off by reaction of the coupler with oxidized deveoping agent, forms a development inhibitor, bleach inhibitor or bleach accelerator.

Examples of DIR-compounds are described by Barr et al., in Photographic Science and Engineering Vol. 13, no. 2, March-April 1969 p. 74-80, and ibidem no. 4, July-August 1969, p. 214-217, in the United States Patent Specifications 3,148,062; 3,227,554; 3,617,291 and the published German Patent Application DE-OS 2,414,006. BIR-compounds are described e.g. in the United States Patent Specifications 3,705,799 and 3,705,803 and the published German Patent Applications DE-OS 2,405,279; 2,412,078 and 2,412,610.

Other bleach inhibitor releasing compounds for use with silver halide emulsion layers are compounds releasing a bleach inhibitor upon alkaline development in the areas where the silver image is formed. Such compounds are described e.g. in the United States Patent Specification 3,705,801.

The BAR-compounds may be of the same type as described hereinbefore for the BIR-compounds with the difference that the image-wise releasable bleach inhibitor moiety is now bleach accelerator moiety. In this connection there can be referred to Research Disclosure October 1973, Disclosure no. 11449 and the published German Patent Application DE-OS

2,547,691.

The polymeric compounds, e.g. polymeric couplers according to the present invention, can be characterized by their so-called equivalent molecular weight. By equivalent molecular weight is understood the number of grams of polymer containing 1 mole of polymerized monomeric compound with chemically reactive moiety, e.g. monomeric coupler. It can be compared with the molecular weight of the non-polymeric classical non-migratory chemically reactive compound, e.g. coupler. The equivalent molecular weight of polymeric latex compounds according to the invention can vary within very wide limits, preferably varies from 200 to 2000.

The latices of the present invention can be prepared by emulsion polymerisation using a polymerisation initiator as described e.g. in the United States Patent Specification 3,926,436 and Belgian Patent Specification 1,130,581.

Examples of polymerization initiators suitable for use in the emulsion polymerisation process are e.g. persulphates such as ammonium and potassium persulphate, azonitrile compounds such as 4,4'-azo-bis(4-cyanovaleric acid) and likewise peroxide compounds e.g. benzoylperoxide.

The aqueous dispersion of the present polymer particles i.e. the latex of the present invention may contain optionally conventional emulsifiers although they can be omitted. If used, they can usually be employed in smaller proportion than is possible with known procedures where no monomeric surfactants in the copolymerisation is used.

Emulsion polymerisation methods of a solid water-insoluble monomer coupler in water are described in U.S.Pat. No. 4,080,211 and Belgian Pat. No. 669,971.

A first polymerisation method comprises dissolving a solid water-insoluble monomer coupler in an ethylenically unsaturated copolymerizable monomer and a water-miscible or poorly water-miscible organic solvent, then adding the resulting solution to an aqueous reaction medium containing an emulsifier and initiating polymerization. The organic solvent suited of use in this method however, must satisfy the following requirements : (1) it is substantially inert to the solid water-insoluble monomer coupler, (2) it does not interrupt the normal action of the free-radical addition polymerization, and (3) it has a low boiling point which makes it posible to easily remove it from the aqueous

reaction medium by distillation during and/or after the polymerization.

The poorly water-miscible solvent has preferably a boiling point of at most 130°C and a sufficiently high vapour pressure so that it can still be removed readily from the aqueous dispersion by applying a vacuum of 665 to 15 mbar at a temperature of 25° to 80°C. Examples of suitable solvents are methylene chloride, ethyl formate, n-butyl formate, ethyl acetate, n-propyl acetate, isopropyl acetate, butyl acetate, methyl propionate, ethyl propionate, diethyl carbonate, carbon tetrachloride, sym. tetrachloroethane, 1,1,2-trichloroethane, 1,2-dichloropropane, chloroform, n-butanol, diethyl ketone, methyl n-propyl ketone, diisopropyl ether, cyclohexane, methyl cyclohexane, benzene, toluene and nitromethane.

A second polymerization method comprises dissolving a solid water-insoluble monomer coupler in an ethylenically unsaturated copolymerizable monomer, then adding the resulting solution to an aqueous reaction medium containing an emulsifier and substance initiating polymerization.

A third polymerization method comprises dispersing a solid water-insoluble monomer coupler and an ethylenically unsaturated copolymerizable monomer or a solid water-insoluble monomer coupler, an ethylenically unsaturated copolymerizable monomer and an organic solvent in an aqueous reaction medium containing an emulsifier and substance initiating polymerization.

In an embodiment for the preparation of a latex according to the present invention the hydrophobic monomer is dispersed in the absence of an organic solvent so that no such solvent has to be removed from the eventually obtained latex. It may be advantageous, however, particularly when the dispersion proceeds with difficulty, to dissolve the monomer first in said already mentioned poorly water-miscible organic solvent(s) and to remove the solvent(s) lateron.

The preparation of polymer coupler latexes including latex-particles having a layered structure is described in US-P 4,444,870. Said preparation proceeds as follows :

(a) at least one ethylenically unsaturated monomer which does not have an ability of oxidative coupling with an aromatic primary amine developing agent is subjected to emulsion polymerization to prepare a polymer latex in a first state polymerization, and then

(b) a monomer coupler capable of forming a dye upon coupling with an oxidation product of an aromatic primary amine developing agent and at least one non-color forming ethylenically unsaturated monomer are subjected to emulsion polymerization in an aqueous reaction medium containing an organic solvent in a second stage polymerization.

Other techniques for the preparation of polymer coupler latexes are described in US-P 3,767,412.

In addition to the repeating units derived from the monomers comprising a chemically reactive moiety the latex polymer of the present invention comprises still other repeating units that are colourless and are chemically inert in the preparation, storage and processing of a photographic silver halide emulsion material. These repeating units are derived from a monomer or mixture of monomers providing particular physical characteristics to the latex e.g. improved thermal stability, and improved compatibility with photographic binders e.g. gelatin. Colourless ethylenically unsaturated monomers that are chemically inert in the sense as defined and that are copolymerisable with the monomers according to general formula (A) are e.g. acrylic acid, methacrylic acid and esters and amides derived from these acids, α-chloroacrylic acid, α-alkacrylic acids, wherein the substituting alkyl contains from 1 to 4 carbon atoms e.g. methyl, ethyl, and n-propyl, the esters and amides derived from acrylic acid, α-chloroacrylic acid and these α-alkacrylic acids, such as acrylamide, methacrylamide, ethyl acrylate, n-butyl acrylate, 2-ethylhexyl acrylate and lauryl methacrylate, vinyl esters such as vinyl acetate, vinyl propionate, and vinyl laurate, acrylonitrile, methacrylonitrile, aromatic vinyl compounds and derivatives thereof such as styrene and its derivatives, e.g. vinyl toluene, vinyl acetophenone and sulphostyrene, itaconic acid, citraconic acid, crotonic acid, vinylidene chloride, vinyl alkyl ethers such as vinyl ether ether, maleic acid esters, N-vinyl-2-pyrrolidone, N-vinylpyridines e.g. 2- and 4-vinyl-pyridine and ethylenically unsaturated monomers such as 2-acetoacetoxyethylmethacrylate.

The stability of the copolymer latices according to the invention may be improved by structural units of an ionogenic comonomer containing at least one long hydrophobic group, e.g. containing at least 8 carbon atoms, and of a strong hydrophilic group, e.g. sulfonic acid, sulfuric acid or phosphonic acid group or salt thereof.

Due to the presence of said ionogenic comonomer the activity of the chemically reactive moiety in the other comonomer is raised in aqueous processing which is clearly demonstrated in the formation of a dye image with a higher maximum density and improved photographic speed when using a comonomer with colour coupler group copolymerised with said ionogenic comonomer.

Representatieve examples of ionogenic monomers are described in US-P 4,340,664 and correspond to the following structural formulae :

1. $$CH_2=CH-CO-NH-CH\begin{matrix} \diagup (CH_2)_{7(8)}-CH_3 \\ \diagdown (CH_2)_{8(7)}-COO-(CH_2)_2-SO_3Na \end{matrix}$$

2. $$CH_2=CH-CO-NH-CH\begin{matrix} \diagup (CH_2)_{7(8)}-CH_3 \\ \diagdown (CH_2)_{8(7)}-COO-(CH_2)_4-SO_3Na \end{matrix}$$

3. $$CH_2=CH-CH_2-N\begin{matrix} \diagup CO-(CH_2)_7-CH=CH-(CH_2)_7-CH_3 \\ \diagdown (CH_2)_4-SO_3Na \end{matrix}$$

4. $$CH_2=CH-CH_2-N\begin{matrix} \diagup CO-(CH_2)_{16}-CH_3 \\ \diagdown (CH_2)_4-SO_3Na \end{matrix}$$

5. $$CH_2=CH-CH_2-O-CO-CH\begin{matrix} \diagup (CH_2)_{13}-CH_3 \\ \diagdown SO_3Na \end{matrix}$$

6. $$CH_2=CH-CH_2-O-CO-CH\begin{matrix} \diagup (CH_2)_{15}-CH_3 \\ \diagdown SO_3Na \end{matrix}$$

7. $$CH_2=CH-CH_2-O-CO-CH\begin{matrix} \diagup (CH_2)_{19}-CH_3 \\ \diagdown SO_3Na \end{matrix}$$

8. $$CH_2=CH-(CH_2)_8-CO-N\begin{matrix} \diagup CH_3 \\ \diagdown (CH_2)_2-SO_3Na \end{matrix}$$

9. $$CH_2=\overset{\displaystyle CH_3}{\overset{|}{C}}-CO-N\begin{matrix} \diagup (CH_2)_{11}-CH_3 \\ \diagdown (CH_2)_3-SO_3Na \end{matrix}$$

10. $CH_2=CH-CO-NH-CH\left\langle\begin{matrix}(CH_2)_{13}-CH_3\\ CH_2-SO_3Na\end{matrix}\right.$

11. $CH_2=\overset{CH_3}{\overset{|}{C}}-CO-NH-(CH_2)_{10}-CO-O-(CH_2)_4-SO_3Na$

12. $CH_2=CH-CO-NH-CH\left\langle\begin{matrix}(CH_2)_{7(8)}-CH_3\\ (CH_2)_{8(7)}-OSO_3Na\end{matrix}\right.$

13. $CH_2=\overset{CH_3}{\overset{|}{C}}-CONH-(CH_2)_{10}CONH(CH_2)_2SO_3Na$

The preparation of the above ionogenic monomers is described in US-P 4,340,664.

The particle size of the emulsion copolymer formed depends on the content of ionogenic comonomer present in the copolymer. Polymer particles having an average diameter smaller than 100 nm, in most cases smaller than 70 nm, are obtained when the copolymer comprises between 2 and 10 % by weight of the ionogenic comonomer.

Surface-active agents, e.g. anionic and non-ionic surface active agents, which are useful in the dispersing of non-self-dispersing monomers may be used too in the dispersing of the hydrophobic substance to be incorporated and/or adsorbed to the latex particles. Such substances are described e.g.in the United States Patent Specification 3,912,517.

After preparing the stabilized dispersion, the said dispersion can be incorporated directly into a hydrophilic colloid composition, e.g. a gelatin-containing composition intended to be used in the manufacture of a gelatin-silver halide photographic material. However, it is likewise possible to create stocks of a concentrated dispersion in water and to use parts of these stocks whenever required.

By the present technique of incorporating a photographically useful groups as a part of a latex particle they are rendered perfectly non-migratory i.e. their diffusion through a hydrophilic colloid medium is inhibited and consequently they remain in the photographic material at the site where they were originally incorporated when not chemically

split off in the processing in a form free to diffuse.

Layers applied from a mixture of the latices with gelatin coating compositions are completely clear and transparent after drying.
The present latex particles prepared according to known emulsion polymerization processes can be loaded with hydrophobic functional substances as described in the United Kingdom Patent Specifications 1,504,949 and 1,504,950 and the published German Patent Specification (DE-OS 2,835,856) e.g. accomplished by gradually adding the latex to a stirred solution of a hydrophobic substance to be loaded onto and/or into the latex particles in a water-miscible organic solvent or in a mixture of such solvents to such an extent that the hydrophobic substance becomes insoluble in the diluted solvent and optionally removing the organic solvent(s) at least partially from the latex. It is believed that during the addition of the aqueous latex to the solution of the hydrophobic substances in the water-miscible solvent, the solution gradually becomes more hydrophilic so that finally the hydrophobic substance leaves the dissolved state. At this very time many latex particles have been added already to the mixture, which particles start swelling in the water-miscible solvent and thus become receptive towards the hydrophobic substance in undissolved state in such a way that they absorb and/or adsorb the hydrophobic substance.

A great variety of hydrophobic organic functional substances can be loaded on the present latex copolymer particles. Hydrophobic substances suitable for loading are e.g. hydrophobic colour couplers, hydrophobic competing couplers, hydrophobic development-inhibitor-relasing compounds, hydrophobic UV-absorbing compounds, hydrophobic filter dye, hydrophobic sensitizing agents, hydrophobic colour developing agents, hydrophobic black-and-white silver halide developing agents, hydrophobic development-activator-releasing compounds, hydrophobic bleaching-inhibitor-relasing compounds, hydrophobic optical brightening agents, hydrophobic anti-oxidizing agents, hydrophobic silver halide solvents, or hydrophobic dye-releasing agents and mixtures thereof.

The hydrophobic "loading" substances may have a function similar and consequently additive to that of the photographically useful units of the copolymer latex particles themselves. For instance, the copolymer latex particles may have recurring units with a colour coupler function and the loaded hydrophobic substance is a colour coupler as well, so that by the

combined colour coupler action an increased colour density can be obtained.

Yet, the function of recurring units of the copolymer latex particles and the loaded hydrophobic substance may be different as well. For instance, the copolymer particles may comprise recurring units having a colour coupler function, whereas the loaded hydrophobic substance has e.g. a competing coupler function, a DIR-function, an UV-absorbing function, an anti-fogging function or developing function.

Suitable water-miscible organic solvents for hydrophobic substance to be loaded are acetone, methyl ethyl ketone, methanol, ethanol, isopropanol, tetrahydrofuran, dimethylsulfoxide, dimethylformamide, and N-methylpyrolidone. Mixtures of two or more of these solvents can be used likewise.

The coating or loading of the latex particles with hydrophobic substances with does not mean necessarily that the latex particles are no longer available for chemical reaction.

The preparation of the latex containing the present copolymer may proceed in different ways.

The following preparation I illustrates how latexes of the present invention can be prepared.

Preparation I

Latex of the copolymer of 1-nydroxy-2-(N-allylamine)-naphthoic acid amide and n-butylacrylate having the following structural formula :

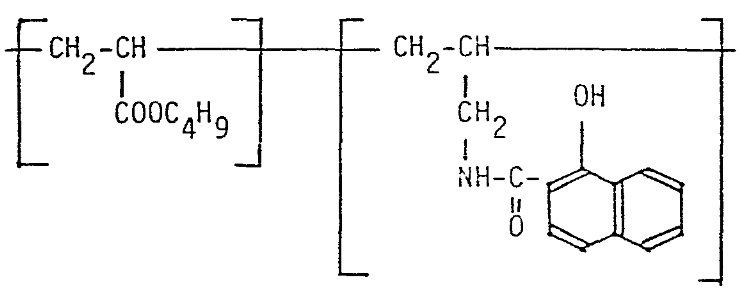

In a 3-necked reaction flask of 250 ml provided with a stirrer, thermometer, reflux condensor, nitrogen-inlet and dropping funnel were introduced successively 135 ml of demineralised water and 0.75 g of N-oleylmethyltauride sodium salt as dispering agent. The solution was stirred at 23°C and 3 g of 1-hydroxy-2-(N-allylamine)-naphthoic acid

amide were introduced. For 10 min the mixture was stirred at room temperature while introducing nitrogen gas.

Thereupon the reaction mixture was heated to 60°C and 12 g of n-butylacrylate were added. Heating was continued and the temperature was raised to 94°C at which temperature the obtained emulsion was stirred for 15 min.

Thereupon 3 ml of a 5 % by weight solution of 4,4'-azo-bis-(4-cyano-valeric acid) sodium salt were added. The polymerisation reaction started and proceeded exothermally, the temperature rose hereby to 97°C.

The reaction mixture was kept for 3 h at 94°C and after cooling the latex was filtered.

Yield : 146.2 g of latex having a solid content of 10.5 g per 100 ml.
Average particle size of the latex particles : 42 nm.

By titration of the poorly acidic hydroxyl group being present on the naphthalene nucleus of the polymer first in latex form and second after dissolving the same amount of polymer in dimethyl formamide 0.045 milliequivalents of -OH per ml of copolymer in latex form and 0.088 milliequivalents of -OH for the same amount of polymer in dissolved form were found respectively. The theoretical amount of -OH in the copolymer was 0.087 milliequivalent per ml. From these values can be calculated that 51.7 % of the -OH groups is chemically reachable, which proves that the major part of the coupler resides at the surface of the polymer particles.

The latexes or dispersions prepared according to the present invention with a photographically useful group find their principal use in the preparation of a hydrophilic colloid-containing layer of a photographic light-sensitive element. Such layer may be a light-sensitive silver halide emulsion layer, a subbing layer, an antistress layer, an antihalation layer or any other auxiliary layer of the photographic material. The concentration of the coating (co)polymer may be adapted as desired. The dispersions are preferably prepared in such a way that the actual concentration of the polymer-coated hydrophobic substance is comprised between about 15 and 40 % by weight. The dispersions can be mixed homogeneously without special mixing techniques in the desired amount with hydrophilic colloid coating compositions before their coating as a layer.

In the preparation of silver halide photographic materials with dispersions prepared according to the present disclosure various silver halides can be used as light-sensitive substance. For instance silver bromide, silver iodide, silver chloride or mixed silver halides such as silver chlorobromide, silver bromoiodide, and silver chlorobromoiodide can be employed.

The hydrophilic colloid used as the vehicle for the silver halide can be, e.g., gelatin, colloidal albumin, zein, casein, a cellulose derivative, a synthetic hydrophilic olloid such as polyvinyl alcohol or poly-N-vinylpyrrolidone. If desired, compatible mixture of two or more of these colloids can be employed for dispersing the silver halide.

The light-sensitive silver halide emulsions used in the preparation of a photographic material according to the present disclosure can be sensitized chemically as well as optically. They can be sensitized chemically by carrying out the ripening in the presence of small amounts of sulphur-containing compounds such as allyl thiocyanate, allyl thiourea, or sodium thiosulphate. The silver halide emulsions can also be sensitized by means of reducing agents e.g. tin compounds as described in the French Patent Specification 1,146,955 and in Belgian Patent Specification 568,687, imino-aminoethane sulphinic acid compounds as described in United Kingdom Patent Specification 789,823 and small amounts of noble metal compounds such as gold, platinium, palladium, iridium, ruthenium, and rhodium compounds. They can be sensitized optically by means of cyanine and merocyanine dyes.

The said silver halide emulsions can also comprise compounds that sensitize the emulsions by development acceleration e.g. compounds of the polyoxyalkylene type such as alkylene oxide condensation products as described among others in United States Patent Specifications 2,531,832 - 2,533,990, in United Kingdom Patent Specifications 920,637 - 940,051 - 945,340 - 991,608 and 1,091,705, and onium derivatives of amino-N-oxides as described in United Kingdom Patent Specification 1,121,696.

Further, the silver halide emulsions may comprise stabilizers e.g. heterocyclic nitrogen-containing thioxo compounds such as benzothiazoline-2-thione and 1-phenyl-2-tetrazoline-5-thione and compounds of the hydroxytriazolopyrimidine type. They can also be stabilized with mercury compounds such as the mercury compounds described in Belgian Patent Specifications 524,121 - 677,337, and in the United

Kingdom Patent Specification 1,173,609.

The light-sensitive silver halide photographic materials incorporating at least one of the present dispersions may comprise also any other kind of substance known in the art as ingredient for photographic silver halide materials, e.g. plasticizers, hardening agents and/or wetting agents and other ingredients described for the preparation and composition of photographic silver halide materials in Research Disclosure No. 17,643 of Dec. 1978.

The silver halide emulsions can be coated on a wide variety of supports. Typical supports include cellulose ester film, polyvinylacetal film, polystyrene film, polyethylene terephthalate film and related films or resinous materials, as well as paper and glass.

The following test proves the presence of cyan dye forming moieties at the surface of the latex particles prepared according to preparation I.

Test.

The latex obtained according to preparation I was coated on a silicagel-carrier used in chromatography and was treated successively with :

1) an aqueous solution of 4-(N-butyl, N-ω-sulphobutyl)-amino-aniline being a photographic colour developing agent, and

2) an aqueous solution of potassium persulphate acting as an oxidizing agent for the developing agent.

A cyan coloured product was obtained.

CLAIMS

1. An aqueous dispersion of a copolymer wherein the copolymer contains recurring units of a monomer which includes a chemically reactive molecule part for use in silver halide photography, called hereinafter chemically reactive moiety, characterized in that said monomer corresponds to the following general formula (A) :

$$H_2C=CH-CH_2-Y \qquad (A)$$

wherein :

Y is a chemically reactive moiety for use in silver halide photography.

2. An aqueous dispersion according to claim 1, wherein said monomer corresponds to the general formula (B) :

$$H_2C=CH-CH_2-Q \qquad (B)$$

wherein :

Q is a colour coupler group or competing coupler group capable of oxidatively coupling with a colour developing compound of the p-phenylene diamine type.

3. An aqueous dispersion according to claim 2, wherein Q is a coupler group of the phenol or naphthol type, of the pyrazolone or indazolone or of the acylacetamide type.

4. An aqueous dispersion according to any of claims 1 to 3, wherein the copolymer in addition to the repeating units derived from the monomers comprising a chemically reactive moiety comprises still other repeating units that are colourless and are chemically inert in the preparation, storage and processing of a photographic silver halide emulsion material.

5. An aqueous dispersion according to any of claims 1 to 4, wherein said other repeating units are derived from acrylic acid, methacrylic acid and esters and amides derived from these acids.

6. An aqueous dispersion according to any of claims 1 to 5, wherein the copolymer in addition to the repeating units derived from the monomers comprising a chemically reactive moiety comprises structural units of an ionogenic comonomer containing at least one hydrophobic group containing at least 8 carbon atoms, and of a strong hydrophilic group being a sulfonic acid, sulfuric acid or phosphonic acid group or salt

thereof.

7. A photographic silver halide material comprising a support and at least one light-sensitive silver halide emulsion layer, characterized in that said layer in water-permeable relationship therewith comprises a copolymer incorporated therein from an aqueous dispersion as defined in any of claims 1 to 6.

8. A photographic silver halide material according to claim 7, wherein said material is a photographic multilayer colour material.

European Patent Office

# EUROPEAN SEARCH REPORT

0185793

Application number

EP 84 11 6293

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 093 924 (AGFA-GEVAERT) * Page 2, last paragraph - page 14, line 16; claims * | 1-8 | G 03 C 7/32<br>G 03 C 1/04<br>C 08 F 226/02<br>C 07 C 103/76<br>G 03 C 7/30 |
| X | FR-A-2 208 136 (ILFORD) * Page 1, line 29 - page 2, line 27; example 1; claims * | 1,4-8 | |
| X | EP-A-0 033 081 (AGFA-GEVAERT) * Page 10, second compound; claims 1,4 * | 1,4-8 | |
| A | GB-A-2 081 463 (FUJI PHOTO FILM) * Page 2, line 33 - page 3, line 29, claim 1 * | 1,4-8 | TECHNICAL FIELDS SEARCHED (Int Cl 4) |
| D,A | EP-A-0 027 284 (AGFA-GEVAERT) * Page 10, line 30 - page 11, line 30 * | 4-7 | G 03 C 7/00<br>G 03 C 1/00<br>C 08 F 226/00<br>C 07 C 103/00 |
| A | US-A-4 350 759 (M.J. FITZGERALD) | | |

The present search report has been drawn up for all claims

| Place of search | Date of completion of the search | Examiner |
|---|---|---|
| THE HAGUE | 22-08-1985 | PHILOSOPH L.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82